# EUROPEAN PATENT SPECIFICATION

(11) **EP 1 582 046 B1**
(45) Date of publication and mention of the grant of the patent: **12.03.2008**
(21) Application number: 03815153.6
(22) Date of filing: 09.01.2003
(51) Int. Cl.: H04L 29/06, H04L 12/64, H04Q 7/38

(54) **METHOD AND APPARATUS FOR CODEC SELECTION**
VERFAHREN UND VORRICHTUNG ZUR CODEC-AUSWAHL
PROCEDE ET DISPOSITIF POUR LA SELECTION DE CODEC

(43) Date of publication of application: 05.10.2005
(73) Proprietor: TELEFONAKTIEBOLAGET LM ERICSSON (publ), 164 83 Stockholm (SE)
(72) Inventor: ARAUZ-ROSADO, Jesus-Javier, E-280 31 Madrid (ES)
(74) Representative: Sjöberg, Mats Hakan
(86) International application number: PCT/SE2003/000020
(87) International publication number: WO 2004/064353

(56) References cited:
- EP-A1- 1 024 637
- EP-A2- 1 079 573
- WO-A1-01/78430
- WO-A1-02/054706
- US-A1- 2001 008 556
- US-A1- 2002 116 447

## Description

### TECHNICAL FIELD OF THE INVENTION

The present invention relates to the control of communications in a telecommunication system; and, more precisely, to the codec selection process in a communication between two or more terminals across said telecommunication system.

### DESCRIPTION OF RELATED ART

A telecommunication system usually comprises, among others one or a plurality of interconnected physical networks of the same or different nature (such as a Local Area Network -LAN-, a Wide Area Network -WAN-, a Switched Telephone Network -PSTN-, an Integrated Services Digital Network - ISDN-, etc.) for providing communication, various server entities entitled to perform specific functions for serving telecommunication services to the users of said system (such as call control functions, user registration functions, gateway functions for translating between different protocols and media format, etc.) and a plurality of terminals which are (or are suitable to be) connected to said physical networks, which obtain communication services from the telecommunication system and which act as endpoints of a communication.

One kind of communication service that can be offered by a telecommunication system is the one known as a "multimedia communication". In a multimedia communication (also known as "multimedia call") the nature of the information that can be exchanged between the endpoints (e.g.: multimedia terminals) involved in it is not limited to traditional "voice" media (audio). Instead, it can convey multiple media types, such as audio, video, , binary data (e.g. a binary file), etc., wherein it is possible to establish a multimedia communication for exchanging only one of these media types, or any combination thereof. Hence, the concept multimedia communication embodies various communication types, such as a voice calls, video conferences, data exchange, etc..

Given that the bandwidth that can be demanded (requested and/or used) in multimedia communications (i.e. the quantity and speed of the media information that can be exchanged) can vary substantially depending on the communication type (e.g. only audio, audio and video, etc), native packet networks (i.e. networks using packet-switching oriented technology for transmission of information), such as LANs of the same or different technology (e.g. ethernet, token ring, Asynchronous Transfer Mode -ATM-), are considered as the most suitable for transporting them. I.e. as opposite to a circuit-switched oriented network, in which the bandwidth available for a given communication is limited to the one offered by the individual circuit assigned to it, in a native packet network, such as a LAN, the total bandwidth can (theoretically) be used in a given communication.
Accordingly, modern standards related to multimedia communication over packet networks, such as H.323 (ITU-T Recommendation H.323, Nov.'00) or SIP ("Session Initiation Protocol", IETF-RFC3261), define the use of data packets to exchange both the signaling and the media, related to a communication .

However, this does not compel to use only physical networks which are native packet data networks for establishing a communication according to H.323 or SIP multimedia standards. Instead, any physical network which offer bearer means able to convey data packets can be utilized. Thus, for example the data transmission capabilities offered by the bearer means of circuit-switched oriented networks, such as PSTN or ISDN, can also be used for this purpose.
Therefore the cited term "packet network" (and, sometimes, "communication network" or, merely, "network") refers in this document to one or a plurality of physical networks that are able to convey, and exchange among them, data in form of packets by using well-known network protocols (such as Internet Protocol, IP) and transport protocols (such as Transmission Control Protocol, TCP, or User Datagram Protocol, UDP), also encompassing not only those physical networks which are pure packet-switched oriented (such as a LAN), but also those physical networks, which are circuit-switched oriented (such as PSTN or ISDN), and which are also able to transparently convey data packets through the bearer service they provide.

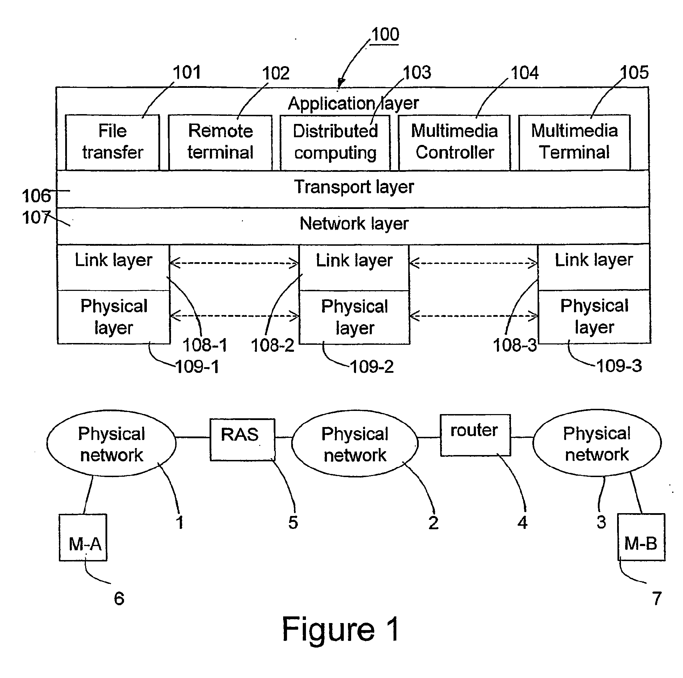

In a scenario wherein a plurality of physical networks are interconnected and co-operate (e.g. by using common protocol(s)), and network elements providing interconnection (such as routers, bridges, etc., as well as routing and/or gateway functions when needed), each of said physical networks are also referred to as "sub-networks". I.e. they are sub-networks of a (virtual) "communication network" that, for example (as will be later mentioned with reference to Fig.1) allows a plurality of applications to co-operate, regardless their physical location, that is to say regardless the physical network (sub-network) where the machine (endpoint, server, gateway, etc.) hosting them is connected.

In a multimedia communication established between endpoints over a packet network, some of the information exchanged, such as the signaling information or media information having an original digital format (e.g. a document exchanged during the communication), can be readily embedded within data packets.
However, when sending media information having originally an analog format (such as voice or video), the original media signal must be first digitized (i.e. transformed into a binary coded representation of the original analog signal) in the origination endpoint, and then transmitted towards a destination endpoint in a stream of subsequent data packets, each packet carrying a given quantity of bits representing a part of the original signal.
At the destination endpoint, these bits are extracted from the stream of data packets and assembled together in order to further reconstruct a copy of the original signal that was captured at the source endpoint.
It is desirable that the copy of the original media signal, that is reconstructed at the destination endpoint of the data packet stream, is as similar as possible (in both timing and waveform) to the original media signal that was captured and coded at the originating endpoint. At the same time it is also desirable to diminish the quantity of bits transmitted in order to avoid over-loading of the transmission resources.

In order to convert an analog signal into a stream of bits (coding), and vice versa (decoding), several algorithms have been developed along the years known as codec algorithms or, simply, codecs, which are implemented by devices (codec devices) which are located wherever said kind of conversion is needed (e.g. they can be located in a user terminal, or in a server machine performing functions of media gateway in a telecommunication system, etc.)..

On its coding operation, a codec device receives a signal, and applies a given coding algorithm to it obtaining a stream of bits that represents the same signal as the original one. On its decoding operation, it performs the reverse function.

Some information from the original signal (e.g. audio signal, image signal) can get lost when it is coded due to, for example, the fact that the information is lost by the compression rate introduced by the coding algorithm. The amount of information that is lost determines the quality that a given codec can provide: higher compression rates will use less bandwidth when transmitting the media information over a network. However, in general, a worse quality can be perceived on the reconstructed original signal, since more information can get lost due to the compression. In addition to the loss of information, the codecs can also introduce delays on its coding and decoding operations.

The following table summarizes the bandwidth demanded and the average quality perceived for some well-known codecs used for audio signals:

| **Codec algorithm** | **Bandwidth usage** | **Perceived quality** |
|---|---|---|
| G.711 | 64 Kbps | Good |
| G.728 | 16 Kbps | Good |
| G.729 | 8 Kbps | Average |
| G.723.1 | 6.3 Kbps | Average |
| G.723 | 5.3 Kbps | Bad |

It shall be noticed that the bandwidth values cited above relates merely to the quantity of bits per second needed to convey media information in real time for media coded according to a given codec. However, in multimedia communications over packet networks, wherein the media travels in form of bits embedded within data packets, the binary rate demanded by a given codec (bandwidth in bits/sec.) is increased by the overhead data introduced by the various protocols that, at different communication layers, are involved in the conveyance of said media. Thus, the bandwidth needed to convey media using, for example, a G.728 codec from the source endpoint to the destination endpoint, shall be higher than 16 Kbps.

Both the recommendations SIP and H.323, provide the signaling framework for negotiating between the endpoints the characteristics of the media they will exchange during its communication, and, more precisely, the codecs they desire to use among the ones they support. In short, it can be summarized that, without the mediation of any other server entity, the codec(s) used in the media exchanged shall be selected between the one(s) that are advertised (indicated) as desired by each endpoint, and which is (are) common to both endpoints.
The codecs advertised by an endpoint can be the ones supported by said endpoint, or a subset of them which are indicated as allowed or desired by its user. In fact, some available multimedia terminal applications which can be loaded in a personal computer for converting it in a multimedia endpoint (such as the *NetMeeting*© of Microsoft©) allows the user to state his/her preferences regarding quality by selecting the codecs that can be used by the endpoint when establishing a communication.

These standards for multimedia communications also define functional server entities (e.g. the so called *"SIP Servers"* in the recommendation SIP, and *"Gatekeepers"* in the recommendation H323) that can perform a variety of functions related to the control of multimedia communications between endpoints. The term *multimedia controller* will hereinafter be used to refer indistinctly to any of said kind of entities.
In short, the functions that can be provided by a multimedia controller are, among others: admission/registration control (e.g. store registration data of a given user from a given endpoint, to be served hereinafter for further communications to/from said endpoint), call authorization and call control signaling (e.g. admitting communications to/from a given endpoint, and mediate in the associated signaling) and bandwidth management (accept or deny new communications or bandwidth change requests for already established ones depending on available bandwidth in the network) etc..

The functionalities provided by a multimedia controller can be performed within the same physical entity (i.e. a computer machine), or be distributed across various physical entities. The term MCS (Multimedia Controller Server) will be used in this document to refer to a multimedia controller in terms of its functional elements, regardless if they are implemented within the same machine, or distributed across various machines.

Additionally, an MCS can further control and modify the content of the signaling exchanged by the endpoints and, more precisely, to control and modify the content of the signaling which is related to the characteristics of the media they intend to exchange (e.g. by neglecting the usage of some codecs to the endpoints). The modifications are usually done based on information that might be not available for the users of the endpoints, for example information related to the network, such as the actual bandwidth usage, the rate of packet loss or packet delay, the class of service assigned to the involved endpoints which can be related to a minimum and/or maximum QoS (Quality Of Service) etc..

Several solutions are known that address the implementation of codec selection policies in an MCS.

For example, patent application EP1024637 discloses an MCS that comprises two functional entities: a standard H.323 Gatekeeper (108) and a novel *"Bandwidth Allocation Server"* (BWAS 109), wherein said BWAS can be either connected or co-located with the Gatekeeper (col.3, lines 4 to 15).
According to said patent, the BWAS receives two threshold values (named "X" and "Y") that, respectively, determine a high-level and a low-level of bandwidth usage on the monitored network. So, if the bandwidth usage in a given moment surpasses the predefined high-level ("X"), it orders to the endpoints to use codecs that requires less bandwidth; then, when the bandwidth usage decreases below the predefined low-level ("Y"), it notifies to the endpoints to restore their preferred codecs.

Another kind of solution is disclosed in patent application EP1079573. Here the MCS comprises: a *Call Server* (12) (which can be assumed to be similar to a standard H.323 Gatekeeper or a SIP server, having further additional functions disclosed in said patent application), a *Policy Server* (18) in charge of usage policy of multimedia communications over the data network (20) and a *Network Monitor* (19), to monitor characteristics and conditions of the data network (20).
According to said patent application, the Call Server (12) manages the "*resource elements*" (among them: codecs) that will finally be used in a communication between endpoints according to:information related to the packet network usage, and packet network usage policy (paragraph 27). Optionally, said Call Server (12) can further act according to the current characteristics and conditions that are provided to it by the Network Monitor (19), wherein said characteristics and conditions concerns to data packet loss percentage and/or packet delays of data packet traversing the different network elements (e.g.: routers) that links the different network portions of said data network (20), as well as to QoS provided by well known methods (such as *Diffserv,* e.g.: IETF-RFC2475) for prioritization queues of data packets in the various routers of a data network (col.4 lines 21 to 27; col.14 line 32 to col.15 line 16; col.16 lines 25 to 30; and claims 9 to 12).

The codec limiting criteria disclosed in EP1024637 and EP1079573 comprising the actual bandwidth usage, and/or the rate of packet loss, and/or packet delay, may be used in an MCS to limit the usage of certain codecs due to dynamic network conditions.

In addition , according to a further embodiment of the aforementioned patent application EP1079573 that will be later discussed, the Call Server (12) can maintain a list of one or more *"communities"* it serves, as well as of the terminals (endpoints) that belong to said *"communities"* (col.18, lines 3 to 5), wherein, according to said patent, the concept of *"community"* refers to a set of endpoints coupled by data links within the data network that have relatively high bandwidth, and which can communicate with each other without being subject to call admission controlled by the Call Server (paragraph 71). So, said Call Server processes a call request (for codec selection purposes) based on if the originating endpoint and the terminating endpoint belongs to the same community (paragraphs 82 and 83).

### SUMMARY OF THE INVENTION

The present invention is concerned with a problem of controlling the codec selection in an MCS (Multimedia Controller Server), controlling multimedia communications in a telecommunication system that comprises a plurality of interconnected physical networks offering different bandwidth capacity for a communication established through them.

The invention is also concerned with a problem that there can be uncertainties in a state-of-the-art MCS to determine details of the underlying physical networks and, more precisely, to determine for a given communication the MCS has to control between two (or more) endpoints, if there is any network element in the underlying physical network said communication will traverse, that can impose some bandwidth limitation concerning the codecs that can be used for it.

Said uncertainties stem from the fact that the control elements of an MCS, which is in charge on high-layer aspects of multimedia communications (call control functions, codec selection functions, etc.), work on top of transport and network layer protocols (that are in charge of low-layer aspects of communications) that hide the details of the underlying physical networks. The control elements are in other words applications that reside in the *application layer* (ISO "layer 7") and thus can use the services provided by lower layers (e.g. transport layer - ISO layer 3, *Network Layer -* ISO layer 3-, *Link Layer -* ISO layer 2 or *Physical Layer -* ISO layer 1-), while ignoring their specific details.

The problem is solved in the following manner. When a multimedia communication between endpoints is received in the MCS, the method and apparatus according to the invention allow to detect whether there are bandwidth limitations due to the bandwidth capacity of the various physical networks said communication will traverse, and then, to control what codec(s) are selected that can be used for said communication based on information concerning said bandwidth capacity.

The method and apparatus according to the invention takes into account a network element that links physical networks of different bandwidth capacity together. The network element acts as a "funnel" network element as it limits the bandwidth of a communication established through it to the highest theoretical bandwidth available per communication in the physical network having the lowest bandwidth capacity among the ones it connects.

Somewhat more in detail the solution comprises the following steps: storing address information related to, at least, one funnel network element which is linking a first physical network and a second physical network of said plurality of physical networks; receiving in the MCS a communication request between endpoints that contains the identifiers of the codecs advertised as desired for said communication; tracing the communication path towards said endpoints; and selecting one (or more) codecs among said advertised codecs for being used in said communication, depending on if said communication path traverses said funnel network element.
The communication request can include various protocol messages exchanged between said endpoints through the MCS; wherein, at least one of them conveys information related to one or more codecs advertised as desired by an endpoint. For tracing the communication path towards an endpoint, the MCS sends an address detection message towards said endpoint. The address information conveyed in the answer received to said address detection message is compared with the addresses that correspond to the funnel network elements known by the MCS; and, if there is a match, the advertised codecs can be limited accordingly.

According to an embodiment, the address detection message is a *path-discovery* message suitable to provide the network addresses (such as IP addresses) of the network elements it traverses.

According to a further embodiment, the address detection message is an *address-resolution* message suitable to resolve a network address (such as an IP address) into a corresponding physical address (such as an ethernet address of a network element in a LAN) in a physical network.

According to still an embodiment, and related to at least one funnel network element, it is further stored information related to the bandwidth provided for communications established through the funnel network element.

According to still a further embodiment, and related to at least one funnel network element, it is further stored information related to the codecs that are suitable to be used for communications established through the funnel network element.

A purpose with the invention is to properly select codecs at different ends of a communication, established over the physical networks.

Another purpose is to investigate the bandwidths in the different physical networks and their linking network elements and select the codecs with respect to that.

The invention has the advantage that it can operate independently of, or in combination with, other well-known methods and apparatuses used in MCS:s for limiting bandwidth usage by limiting the codecs advertised by the endpoints.

Another advantage is that the benefits provided by this invention can be achieved without requiring modifications in endpoints or in network elements of the underlying physical networks (such as routers, bridges, remote access servers, etc.).

The invention will now be more closely described with the aid of preferred embodiments and with reference to the following drawings.

### BRIEF DESCRIPTION OF THE DRAWINGS

**Figure 1** shows a block schematic over a layered communication structure in a telecommunication system that provides various communication services.
**Figure 2** shows a block schematic over a logical architecture of a state-of-the-art multimedia controller server, MCS.
**Figure 3** shows a block schematic over a more detailed content of some stored data shown in Fig.2.
**Figure 4** shows a block schematic over a possible network topology in a telecommunication system providing multimedia communication services, together with its corresponding layered structure.
**Figure 5** shows a block schematic over a logical architecture of a multimedia controller server, MCS, according to the invention.
**Figure 6** shows a block schematic over the content of new data stored according to the invention.
**Figure 7** shows a summarized flowchart of a codec selection according to the invention.
**Figure 8** contains a more detailed flowchart of a codec selection according to the invention.
**Figures 9** **and** **10** diagrams over a simplified signaling flow of a communication request between endpoints, according to the H.323 protocol, showing the novel features of the invention.
**Figure 11** is a diagram over a simplified signaling flow of a communication request between endpoints, according to the SIP protocol, showing the novel features of the invention.

### DETAILED DESCRIPTION OF EMBODIMENTS

Fig.1 shows a layered communication structure of a telecommunication system that provides various communication services. In the figure are shown file transfer applications 101, WWW applications 102, electronic mail applications 103 and also applications related to multimedia communications, such as multimedia controller applications 104, and a multimedia terminal applications 105. It can be seen that these well-known applications, providing communication services, work on top of a transport layer 106 and network layer 107 protocol stack 100, which is common all the way across the various physical networks. Those networks are a physical network 1, a physical network 2 and a physical network 3, and the protocol stack links them so as to form a communication network.

An example of a transport-layer/network-layer stack for providing a communication network across various physical networks is the one formed by TCP or UDP (as transport protocols) and IP (as network protocol), usually named as TCP/IP or UDP/IP. Although not shown in Fig.1, the common network layer 107, using a network protocol such as IP, can work on top of another communication layer that implement, for example, another network protocol more specific of the underlying physical network.

The physical networks depicted in Fig.1 can have similar or different nature. For example, physical network 3 can be a 1 Gbps ethernet LAN and physical network 2 can be a 10 Mbps network. The physical network 1 can be, for example, a public circuit-switched oriented network, such as a PSTN. For providing connectivity among them, a network element, such as a router 4, can be connecting physical network 3 with physical network 2, while another network element, such as a RAS (remote access server) can be connecting physical network 2 with physical network 1, PSTN.

A communication network based on a transport-layer/network-layer stack, such as TCP/IP or UDP/IP, in the one hand, provides communication services to the applications regardless details of the lower communication layers (108, 109) of the various physical networks, and, in the other hand, is able to interface with the corresponding lower layers (108-1, 108-2, 108-3) of these physical networks.
Accordingly, a given application such as MM terminal 105 that is located in a machine, e.g. the computer machine M-A 6 connected to the physical network 1, can communicate with other applications e.g. the MM controler 104, residing in the other machine M-B 7 and connected to the other physical network 3. This communication is performed by using a network address of the counterpart machine, such as an IP address 193.180.251.32, while the underlying characteristics of said communication is unknown. More precisely, the physical address in the physical network where said counterpart machine is connected is unknown, such as an ethernet address 8:0:20:9c:53:90 of said machine in LAN where it is connected. So, for example, an application implementing the multimedia controller functions 104 in an MCS, can communicate with an application implementing the multimedia terminal 105 in an endpoint of the communication, using their respective IP addresses.

As can be seen from the protocol layered structure depicted in Fig.1, the transport and network protocol layers 106 and 107, e.g. TCP/IP or UDP/IP, which are "continuous" all the way through the different physical networks physical network 1, physical network 2 and physical network 3, hide to the applications the specific details of the network topology used in the communication, since they hide the details of the underlying physical networks.
In the specific case of multimedia communications, this has the advantage of hiding these topology details to the application(s) of a MCS, which implement basic functions for admission, call authorization, call control, etc. But it has the drawback of hiding said topology details also to applications which performs codec selection functions, even to those mentioned earlier which are based on gathered information related to network status.

This drawback is addressed by the aforementioned aspect of patent application EP1079573.
According to said aspect, it is also possible to process a call request depending on if the identifiers of the calling and called endpoints belong to the same *"community"* or not. Although it is not explicitly stated in said application what kind of identifier of a given terminal (endpoint) can be used to determine in the "*Call Server*" (12) if the communication is *"inter community"* or *"intra community",* the skilled person would be driven to assume said identifier to be either an address associated to said terminal (such as an IP address), or an identifier of the user registered in said endpoint. Since these kind of identifiers are the ones used in well known multimedia protocols (such as H.323 or SIP) when requesting a communication, e.g. when making a call, wherein the terminal (endpoint) is identified by an IP address and by the alias or aliases of the user registered on it.

Should said identifier be a network address of the terminal such as an IP address, the feature taught in EP1079573 could be suitable for cases wherein two conditions are always fulfilled: first, the terminal (endpoint) uses a static network address and, second, said terminal is not supposed to be movable, i.e. it is instead connected to another connection point of the network. Otherwise there would be no basis to infer a physical location from a network address.
There could be basis only if the terminal gets a static network address, and it is always connected in the same physical connection point. However, in packet networks, where the network address space is scarce and expensive, a dynamic network address assignment scheme is commonly used for user terminals, such as PCs, IP based telephony terminals (multimedia endpoints), etc. Thus the same terminal can receive a different network address every time it connects to the network, even if it does always from the same connection point, i.e. even if it is not movable.

Should, instead, the identifier mentioned in EP1079573 be an identifier (alias) of the user using said terminal, such as an E.164 number e.g. +34 5555555, a Uniform Resource Identifier URI e.g. "John_doe@companyX.com" or the like, the feature taught in EP1079573 could not be used to infer a physical location from said identifier if said user is supposed to be able to use (i.e. register into) another terminal, or even to use the same terminal, but connected in a different location.

Codec limiting criteria, such as the actual bandwidth usage, or the rate of packet loss and/or packet delay, may suffice to limit in an MCS the usage of certain codecs due to dynamic network conditions.
However, the usage of the identifier of the calling or called endpoint, being this either an address of the endpoint or an identifier of its user, does not provide per se a reliable basis to determine the location of the endpoint. Thus, it may not suffice as a codec limiting criteria to determine if there can be bandwidth limitations in a communication between endpoints due to the underlying physical networks said communication can traverse.

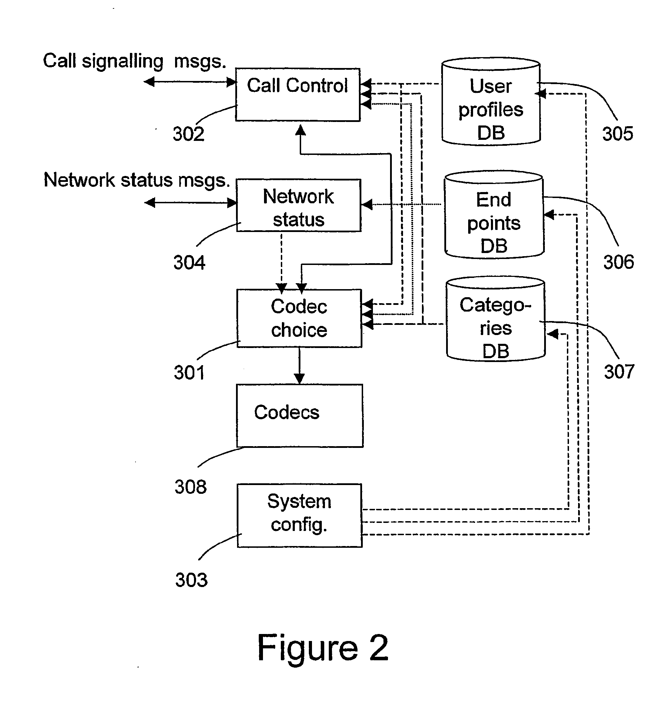

A possible logical architecture of a state-of-the-art MCS shall now be described with reference to Fig.2 in terms of its functional elements and the data managed/stored.
However, it should be understood that the generic architecture depicted in Fig.2 is given just as an example to illustrate well-known functions performed and data managed/stored by a MCS, that will be used later as a basis to detail and highlight novel features of the present invention, and it does not intend to relate to any specific physical architecture (e.g. if these functions/data are performed/stored within one physical machine or distributed across several interconnected machines), nor intends to compel any other alternative logical MCS architecture having a different number of functional elements of the ones described (or a sub-set of them), or managing/storing other data (or a sub-set of the ones described).

The functional elements in an MCS 48 depicted in Fig.2 shall now be briefly described. As other functional elements operating from the application layer of a functional server entity of a modern telecommunication system (or in a terminal/endpoint), said functional elements are accomplished by means of processing means, implementing the service logic, and communication means, that provide communication with further functional elements (and/or access to databases) located, either within the same physical machine or in a different machine; and can be implemented by means of software, hardware, or combination thereof.
In particular, communication means for allowing communication between functional elements (or access to data bases) located either within the same machine, or located in another machine (including communications with endpoints), can be accomplished, respectively, by means of well-known internal communication means allowing, for example, communication between processes and/or accesses to internal storage means, and by means of well-known external communication means performing, among others, transport layer functions, network layer functions, data link layer functions and physical layer communication functions. These communication means not detailed in Fig.1, are known by those skilled in the art, and, thus, does not need to be further explained.
Call Control block 302: this functional block controls the establishment and releasing of communications, and communicates with its counterpart functional blocks in multimedia endpoints. It can also carry out various additional functions related, for example, to the provision of supplementary services such as call forwarding, multiparty conference, etc. Codec Selection block 301: this functional block decides, based on codec(s) advertised by endpoints, and, optionally, based on information gathered from the other blocks, what can be the acceptable codec(s) for a communication.
- Codec block 308: this block includes the codecs that can be selected by the block 301.
- System Configuration block 303: this functional block can initialize and/or modify the content of the MCS databases 305, 306 and 307.
- Network Status block 304: this functional block can gather, classify and store data about bandwidth usage, delay and packet loss rate of the packet network, etc., in order to support further codec selection based on the known state of the network.

Fig.2 also shows a logical scheme of the various data that can be stored by the storage means of a state-of-the-art MCS, and managed by it. This logical scheme shows separate storage elements, i.e. data bases DB 305, 306 and 307. However, this is displayed in that way only for explanatory purposes, wherein, for example, other storage alternatives (e.g. within only one data base) are also possible.
- User profiles DB 305: here information about the users known to the MCS is stored. For a given user, it is usually stored an identifier (such as an E.164 number, a user name, etc.) of said user. Further data, such as class of service associated to said user (category) or user passwords, can also be stored.
- Endpoints DB 306: here, information regarding every known endpoint on the MCS domain is stored, i.e. a terminal from which a user has registered his/her presence into the MCS, or all terminals it is assumed to serve. It usually comprises network address of the endpoint (such as an IP address), and identity information of the user currently logged-on (registered) at the endpoint.
- Categories DB 307: here information regarding user categories and privileges is stored. For example, it can store the type of calls that can be made/received by a user having said category, e.g. if calls to/from certain destinations are allowed or not, the QoS to apply to said category, the codecs supported for said QoS etc. The information stored here can support the codec selection process, based on user privileges regarding QoS.

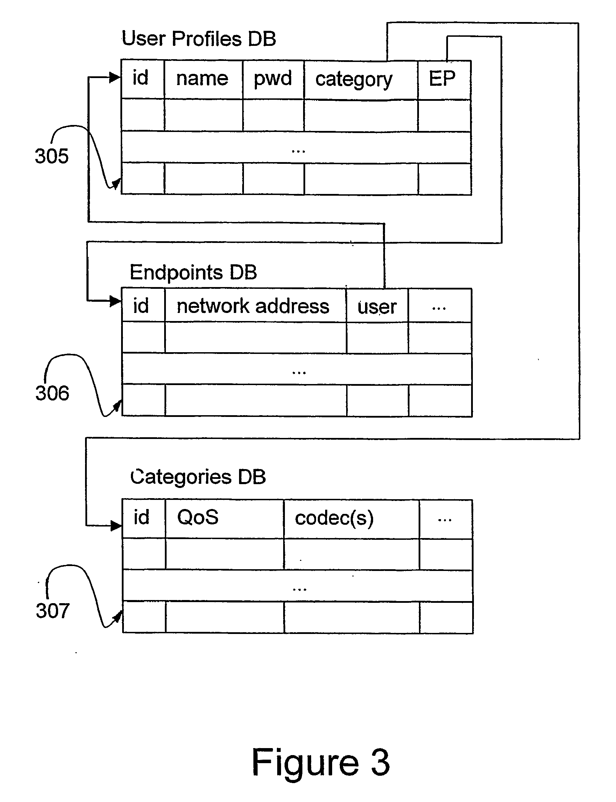

Some further relationship between data based cited above, which are not shown in Fig.2, as well as an outlined possible content type for each is shown in Fig.3.
For example, data stored in the User Profiles DB 305 for a given user, can point out an entry in the Categories DB 307 that correspond to said user, as well as to an endpoint where said user is registered. For example, data stored in the Endpoints DB 306 for a given endpoint, can point out an entry in the User Profiles DB of the user who has registered on it.

Also, for users who have registered his/her presence into the MCS, as well as for calls (communications) it is handling (either already established or being established), some further data not shown in figures 2 or 3 can be stored within a state-of-the-art MCS with the purpose of finding out data related to a given call. Said data can, for example, establish a relationship between a user, i.e. one of his/her identifiers, with the endpoint's network address in which said user has registered, as well as with the call(s) said user is involved in wherein, according to the known-art, a call is usually identified by a unique identifier assigned according to the used protocol, such as a *callIdentifier* according to the recommendation H.323, a *Call-ID* according to the recommendation SIP, etc. Since an MCS usually stores data related to registered users, as well as related to ongoing calls, into dynamic registers (as opposed to registers having more static nature, as the ones depicted in Fig.3), these relationships are usually accomplished by storing in said dynamic register a link, e.g. a pointer, towards the corresponding entry in the User Profile DB 305 and towards the corresponding entry in the Endpoints DB 306. This, as shown in Fig.3, helps to easily find out any data related to a user and his/her endpoint at any moment during the call processing.

As cited previously, linking the various physical networks (or sub-networks) of a telecommunication system, wherein a MCS provides control functions for multimedia communications, there can be network elements, such as routers, bridges, remote access servers (RAS:s), that provide interconnection between said physical networks as well as, when needed, the appropriate gateway functions to convert format of either the signaling exchanged at some communication of the communication, and/or the media exchanged. In a communication established between terminals (not only between multimedia endpoints, but between any other kind of terminal) connected to two different physical networks which offer a different maximum bandwidth per communication, a network element which links said two physical networks, acts as a "funnel" for said communication, a funnel network element.

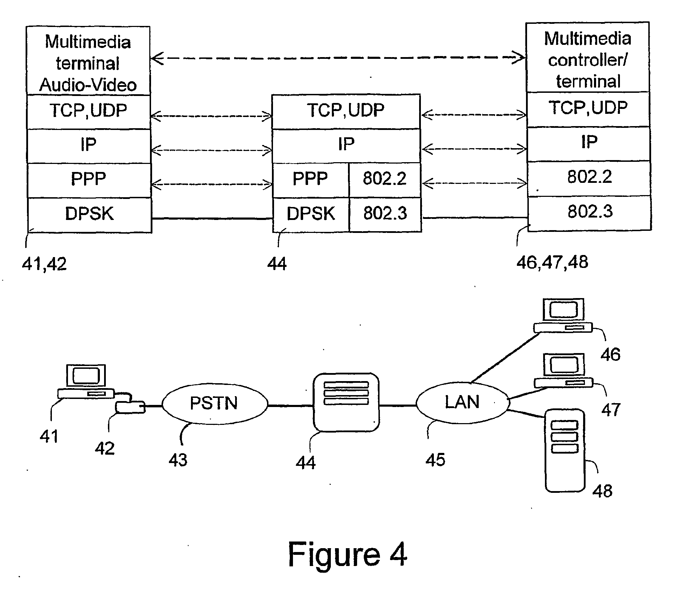

Fig.4 illustrates a telecommunication system providing multimedia communications comprising an MCS 48, a plurality of physical networks (43, 45), and a plurality of endpoints 41,46 and 47 connected to said physical networks.

The physical scenario showing the topology of the communication is depicted in Fig.4, bottom. It shows a multimedia endpoint device 41 connected to the PSTN 43 (as an example of a first physical network) via a data adapter unit 42, e.g. a modem, which has access to a company's private data network 45 (as an example of a second physical network) via a remote access server RAS 44. Within the company's private data network, an MCS 48 controls multimedia communications for multimedia endpoints 46 and 47 directly connected to the company's data network 45, as well as for the multimedia endpoint 41 connected to the other physical network 43.
For simplicity, the company's private data network 45 appears to be depicted as a single local area network (LAN); however, it could be further comprised, for example, of a plurality of interconnected physical networks (e.g. a plurality of LANs) interconnected by a plurality of network elements.
Similarly, the MCS 48 appears to be depicted as implemented within a single machine. However, as stated in connection with Fig.2, this can be an alternative realization, wherein for example the functionality of the MCS could be distributed across various physical machines.

A network element such as the RAS 44 is an example of a funnel network element, since a terminal accessing through it to a native packet data network via, for example, a modem connected to PSTN or ISDN, does not gain access to the same bandwidth capacity as if the terminal was directly (physically) connected to the same network.
The RAS is a well-known network element utilized presently for providing to a terminal (such as a personal computer) connected to a public circuit-switched network (like, for example, the PSTN or the ISDN) data connectivity with a private data network (like, for example, a LAN). The RAS allows among others tele-work, since it provides to a user working at home a "virtual" connectivity to the company's private data network, thus gaining access to the same resources the user would gain if "physically" connected to the data network.

The data connectivity provided by the RAS 44 allows a remote machine to communicate with other machines (terminals, servers, etc.) connected to the private data network. The RAS thus allows the remote machine, among other functions, to behave like a multimedia endpoint and to establish a multimedia communication with another multimedia endpoint connected to the private data network. The RAS can perform authorization and authentication functions, as well as the necessary gateway functions, including modem terminating functions, for allowing the interworking between different physical networks, thus providing a transparency to the upper layers of a communication. Therefore, the RAS allows different applications running on the remote terminal (e.g. connected to PSTN) and other applications running on machines directly connected to the company's data network to communicate seamlessly as if they were all connected to the same physical network.

Fig.4, top, depicts a layered structure for the particular case of a communication established between a multimedia endpoint 41/42 with the MCS 48 and/or with another endpoint, 46,47, via the RAS 44. As depicted, the RAS provides up to the TCP/IP and UDP/IP layer, as well as the terminating gateway functions at physical and link layer of the sub-networks it connects 43, 45. At the application layer, the applications in the remote endpoint 41 (i.e. multimedia applications entitled to perform high layer functions for call control and audio/video applications for controlling media exchange) communicate with their counter part applications, either or both in the MMC and in the "local" endpoints, by using the communication network provided by the TCP-UDP/IP common infrastructure which hides the particularities of the physical networks below. The numeral "41/42" refers to the layered communication stack in the remote endpoint device 41 in combination with the data adapter 42 used.

In particular, according to the recommendations SIP or H.323, applications implementing control and exchange of call signaling messages (located in both MCS:s and endpoints), usually use the services of TCP, since this transport protocol has its own internal mechanisms to allow a reliable transfer of data. Other applications implementing control and exchange of media according to these standards (usually located only in endpoints and media gateways), such as RTP/RTCP (Real Time Protocol, RTP Control Protocol; IETF-RFC1889), usually use the less reliable transfer capabilities of UDP.
Thus, a (partial) protocol stack involved in call signaling according to the recommendations SIP or H.323 would be: "Multimedia-controller or Multimedia-terminal application" over "TCP" over "IP" (MM-application/TCP/IP). The corresponding (partial) stack involved in the media exchange would be: "Audio-Video-application" over "RTP" over "UDP" over "IP" (A-V/RTP/UDP/IP), wherein as mentioned earlier, RTP, UDP and IP (as well as underlying "link layer" protocols) add each their own overhead of bits, thus causing that the final bandwidth needed to convey media coded according to a given codec, extends beyond of the theoretical bandwidth demanded by a given codec.

In a scenario as the one described in connection with Fig.4, when the MCS (48) receives a communication request between endpoints, it can verify if any of the codecs they advertise imply an admissible bandwidth through the network path towards any of them. To perform this verification, the MCS will check if the network path towards any of said endpoints passes through a funnel network element such as RAS 44.
To accomplish with this, some modifications in the MCS are introduced according to the invention

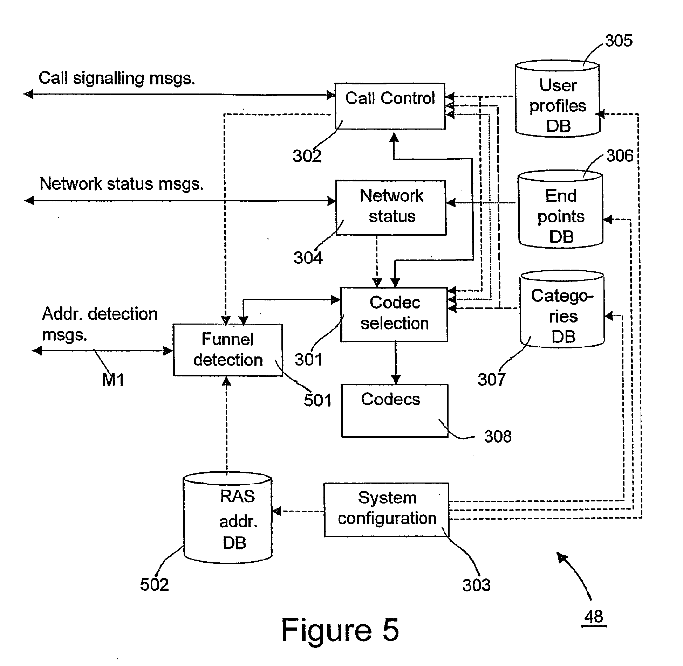

The modified logical architecture of functional elements in a MCS shall now be described with reference to Fig.5, which is based on the logical architecture given as example in Fig.2.

There is a new database, named "RAS addresses DB" 502. Data in this new database are used by a new functional block named Funnel Detection block 501.

The name given to the new database,"RAS address DB" 502, is just given as an example. Therefore, the scope of the information it can store should not be understood as limited to "remote access servers" (RAS).

According to the invention, the RAS addresses DB 502 will store information related to network elements that can impose bandwidth limitations in a communication, such as remote access servers, router, bridges, etc.. This new data base 502 can be implemented by using any of the storage means available for the MCS. Also, although in Fig.5, it is shown as a separate database, its data can be, for example, stored in any other database which contains also other kind of data.

The Funnel Detection block 501 is entitled to trace the network path towards an endpoint involved in a multimedia communication, and to act upon the advertised codecs according to it based on information gathered from the RAS address DB 502. Although in Fig.5 this functional block 501 is depicted as a stand-alone functional block, it should be understood that its functionality could equally be embedded within another (existing) functional block modified accordingly (e.g. within the Code Selection block 301).
In summary, the Funnel Detection block 501 can discover a bandwidth limitation by sending an address detection message M1 towards an endpoint, and then compare address(es) contained in the corresponding answer with the addresses stored in the RAS addresses DB 502.
As in Fig.2 the Fig.5 also shows the Call Control block 302, the Network Status block 304, the User profiles DB 305, the Endpoints DB 306, the Categories DB 307 and the Codec block 308.

Assuming, as an example, that the Funnel Detection block 501 is a stand-alone functional block. Then the Codec Selection block 301 is modified so as, for example, it interworks with the Funnel Detection block 501 to obtain a refined codec list which is suitable for the call being processed.

The System Configuration block 303 is also modified to configure data stored in the RAS addresses DB 502.

Further details of these new/modified elements, as well as their interactions, shall hereinafter be explained.

Before the various functional elements in an MCS starts processing communication requests according to the invention, the data stored in the RAS addresses DB can be configured from the System Configuration block 303. These data, whose content will be later detailed, will be related to one or more funnel network elements that exist across the various physical networks, through which multimedia communications can take place and which funnel elements are controlled by this MCS. Thus, various means in a state-of-the-art functional block 303 in charge of configure operational data in an MCS, such as for example OA&M (operation, administration and maintenance) commands, and arranged to write, read, or modify data into a database. Configuration files, which are distributed during start-up or restart phases of the a functional block in the MCS, or of the entire MCS, can be used for this purpose.

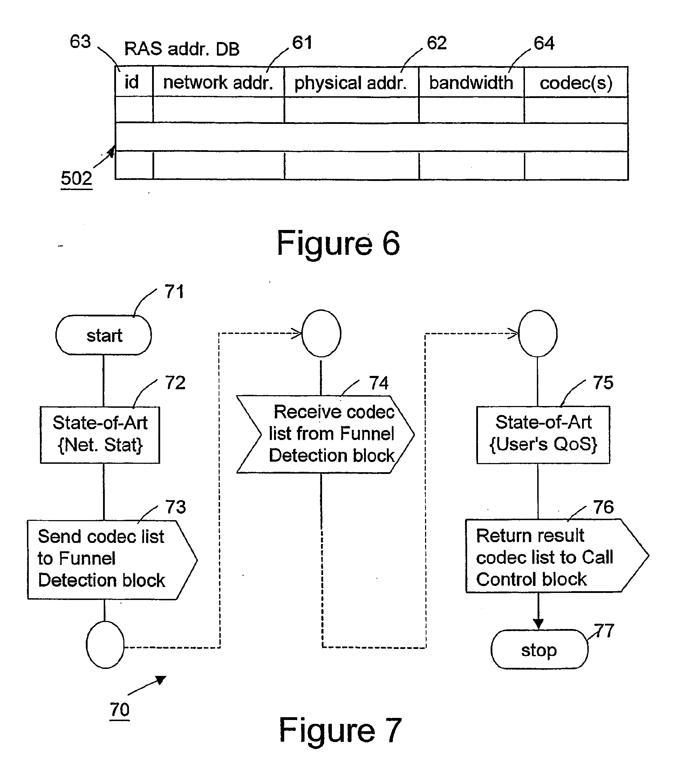

In Fig.6 an exemplifying structure and content of the RAS addresses DB 502 is shown in detail. One entry in the RAS addresses DB stores, at least, address information of one funnel network element. According to different embodiments, the address information stored in this database 502 can contain:
- network addresses 61, such as IP addresses;
- physical addresses 62, such as ethernet LAN addresses; or
- both.
   So, for example, for the RAS 44 of Fig.4, it can be stored its IP address (e.g.: 193.180.251.32), its physical address in the ethernet LAN (e.g.: 8:0:20:9c:53:90), or both.

According to an alternative embodiment, an entry in the RAS DB can also contain the identifiers 63 of the codecs that can be supported by a given funnel network element, or, alternatively, the identifiers of those codecs not supported. For example, starting from a known value of a maximum bandwidth per communication in a funnel network element, such as 64 Kbps in-a RAS, and considering an average overhead introduced by intervening protocols (e.g. RTP, UDP, IP, etc.), it can be stated a list of codec identifiers that prevents to use codec "G.711".

According to a further alternative embodiment, an entry 64 in the RAS addresses DB further stores bandwidth information.

The "bandwidth" field 64 can, for example, contain an identifier that represents the maximum bandwidth that can be through-connected per communication (e.g. multimedia call, data connection, etc.) established through a funnel network element whose address 62 is in the same row as said field. Such an identifier can be, for example, an integer number which represents a bandwidth expressed in Kpbs.
Alternatively, the "bandwidth" field could be empty (or not existing), wherein, for example, for a RAS which connects a private LAN with a public circuit switched network (e.g. PSTN or ISDN), it can be assumed a given maximum bandwidth value per communication (e.g. 64 Kbps.).
Alternatively, the "bandwidth" field can contain the total bandwidth available through a funnel network element. So, keeping track in the MCS of the ongoing communications established through said network element (by means of *address-resolution* messages, or *path-discovery* messages sent for each communication request, as will be further detailed), it can be determined the remaining bandwidth on it in a given moment. For example, for a RAS server connected to the PSTN by means of a number of "n" modems of "p" Kbps each, the bandwidth limitation to be stored should then be "n" times "p". For another kind of network element that could act as a funnel (e.g. a router or a bridge), its total bandwidth capacity, or just a part of it which can be configured for multimedia communications, can be stored.

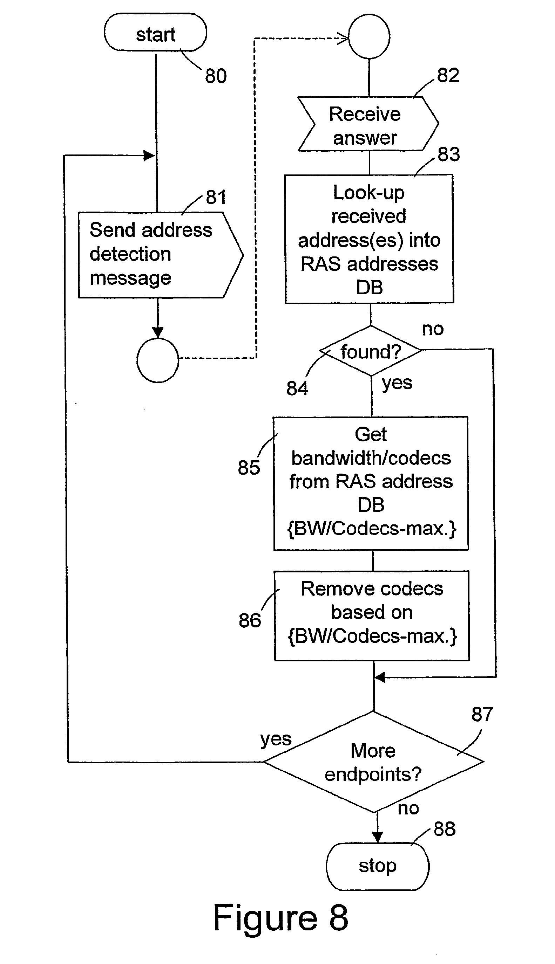

The flow chart depicted in Fig.7 summarizes, in an embodiment, a codec selection process 70. This process, according to the general architecture depicted in Fig.5 for explanatory purposes, can be assumed to be executed in the Codec Selection block 301 at reception of a set of codecs advertised by an endpoint, which codecs are received from the Call Control block 302. The general description of the operations depicted in Fig.7 is as follows:
- The process starts at a step 71.
- In step 72, according to the state-of-the-art, those codecs advertised by an endpoint that are not appropriate according to known network conditions can be dropped. Such conditions are rate of packet loss, packet delay, actual bandwidth usage etc.
- The remaining codecs identifiers (or the values of their respective demanded bandwidth) are passed in step 73 to the Funnel Detection block, that performs a further filtering of codecs according to the invention. The details of the actions performed by said block will be later related with reference to Fig.8.
- The remaining codecs from the funnel detection block 501 are received in step 74.
- From these remaining codecs a state-of-the-art further filtering criteria can be applied in step 75 for those that do not fit to user's QoS.

As a result of this process (and following the explanatory architecture of Fig.5), the list of remaining codecs (e.g. one, none, or a sub-set, of the identifiers of codecs advertised) are then delivered in step 76 to the Call Control block 302 as the ones suitable for the communication. The process stops in a block 77. The Call Control block shall then take the appropriate actions according to the specific multimedia protocol it uses to communicate with the endpoints, as will be later detailed with reference to some specific multimedia protocols.

It shall be noticed that the order of the steps cited with reference to Fig.7, shows just an alternative example of precedence. However, this order can vary according to alternative embodiments. Furthermore, steps 72 and 75 are previously known and only the actions involving the Funnel Detection block, steps 73 and 74, are the new ones in the embodiment.

As mentioned earlier, the Funnel Detection block can limit the usage of some (one, more, or all) codecs advertised by an endpoint in a communication request, depending on if there can be a funnel network element in the network path towards any of said endpoints. To perform this function, the Funnel Detection block will check the network path towards said endpoint by sending an address detection message towards its network address, i.e. an address which is unique across a communication network having a common network-protocol based infrastructure across different physical networks (such as an IP based infrastructure), and taking actions over the advertised codecs depending on if the answer to said message conveys information or not concerning one or more funnel network elements.
The address detection message can be, for example:
- a path-discovery message, which is sent towards a network address, and whose answer conveys address information related to the network path it traverses, i.e. the network addresses of the network elements traversed until it gets to the entity having the network address specified; or,
- an address-resolution message, which is sent towards a network address, and which gives back the corresponding physical address (if available).

In a communication network having an IP based common network infrastructure, an example of a path-discovery message is a *"TRACEROUTE"* message. This message is supported by ICMP ("Internet Control Message Protocol", IETF-RFC792) which is implemented in the Internet Protocol, IP (IETF-RFC791). By sending a *"TRACEROUTE"* message towards a given IP address, it can be obtained as an answer a list of IP addresses corresponding to the network elements it traverses on its path towards the network element having the specified IP address, including also said specified IP address, together with further information, such as the names of said elements.

In a communication network having an IP based common network infrastructure, an example of an address-resolution message is an "ARP" message ("ethernet Address Resolution Protocol", IETF-RFC826). By sending an "ARP" message towards a given IP address it can be obtained as an answer the physical network address that correspond to the specified IP address. As opposed to "TRACEROUTE", an "ARP" message does not get propagated through certain network elements, such as a RAS, since ARP is designed to be used in a physical network supporting broadcast of information. So, an answer to an "ARP" message can contain empty address information.

Both, "TRACEROUTE" and "ARP" are available services that can be requested (i.e. utilized) from an application working on top of an IP based network infrastructure by using a direct service interface provided by IP. Therefore, the same internal communication means which are used by an application process to access to a communication service provided by a lower communication layer in order to communicate with a counterpart application process, can be used for accessing to the address detection functions provided by "TRACEROUTE" or "ARP".

The flow chart in Fig.8 summarizes the actions performed by the Funnel Detection block (501) between steps 73 and 74 of the aforementioned Fig.7, and illustrates novel actions in the codec selection process 70. The Funnel Detection block 501 can use, as an input (e.g. provided from the Call Control block 302 via the Codec Selection block 301) data related to one or more endpoints involved in a communication request, said data comprising for example the IP address of one of the endpoints, or the IP addresses of several endpoints, as well the identifiers of the codecs that have been advertised (or a sub-set of them), or an identifier for each which represents its equivalent bandwidth (e.g. an integer number that express in Kbps said bandwidth). Alternatively, for example, it can receive as an input an identifier for the corresponding communication request (e.g. a *callIdentifier,* a *Call-ID,* etc.), and use it to fetch these data from the corresponding functional block (e.g. obtain them from the Call Control block, Codec Selection block), dynamic register, etc., which stores them.

The flow starts in a step 80. In a step 81, the Funnel Detection block 501 selects one of the received (or obtained) IP addresses and sends an address detection message to it. Since the time to receive a response to it in a step 82 can vary, a timer of a pre-determined value can be started in step 81. So, at time-out of said timer, it can give back an answer stating this event to the functional block which triggered its operation (e.g. the Codec Selection block), which, in turn, can make a further final decision regarding the codecs that can be used in said situation. Said decision can comprise actions such as leaving only those codecs using a low bandwidth, or even, determining if the communication requested can proceed. If, for example, a "TRACEROUTE" message has been used it can take some time to obtain all the IP addresses up to (and including) the specified IP address, those IP address available at the time-out can be utilized.

In step 82 it is received the answer to the address detection message or, as cited above, a time-out has occurred. The address information conveyed in the response received in step 82 will according to the address detection message be sent in step 81. Thus, if an "ARP" message was utilized, the address information in the answer can contain one physical address. Otherwise, if the *"TRACEROUTE"* message was utilized, one or more IP addresses can be conveyed in the answer. It could happen that the answer comprises no address information. In this situation, a similar procedure as the one cited above in case of time-out cited above can be followed.

The address obtained in step 82 is used to query the RAS addresses DB 502 in a step 83, and to obtain information stored on it for the matching address, in case there is matching. According to different embodiments mentioned earlier, the obtained information can comprise the matching address itself (or a list of them), a figure related to the bandwidth supported, a list of containing one or more codecs supported, or any combination thereof.
One or more than one matches can be found ,a step 84, alternative "yes". Otherwise, if no match is found step 84, alternative "no", the flow continues in a step 87, as will be later explained.

In a step 85, if one match has been found in the previous step, then further detailed actions would depend on various alternative embodiments.
According to an alternative embodiment not shown in Fig.8, a further action can be taken to drop some of the advertised codecs based, merely, on the fact that a funnel network element has been found (e.g. drop those codecs whose bandwidth surpasses a given pre-defined value).
According to a further alternative embodiment, wherein the Funnel Detection block 501 receives (or obtain) the identifiers of the advertised codecs, those which does not fit with the codec or bandwidth information obtained from the RAS addresses DB in step 3, shall be dropped.
According to a further alternative embodiment, wherein the Funnel Detection block receives (or obtain) bandwidth identifiers representing each the equivalent bandwidth of an advertised codec, those which does not fit with the codec or bandwidth information obtained from the RAS addresses DB in step 83, shall be dropped.

If more than one match was found in previous step 82, then the filtering actions described above for step 85 can take place, considering only the most restrictive funnel network element found.

In step 87, an alternative "yes", the process described in steps 81 to 86 is repeated for all the endpoints whose information has been received (or obtained) when triggering the operation of the Funnel Detection block. Thus, for example, it can be triggered for only one endpoint and the set of codecs it has advertised (of a sub-set of them), for only one endpoint and the common set of codecs with a counterpart endpoint in said communication (of a sub-set of them) or for various endpoints involved in a communication request and their common set of codecs (or a sub-set of them). In an alternative "no" the process is stopped in a step 88.

As a result, and following the example case, wherein the Codec Selection block 301 of Fig.5 triggers the operation of the Funnel Detection block 501, the remaining codecs identifiers, or the remaining identifiers which represents their respective equivalent bandwidth, are delivered back to the Codec Selection block, which in turn can give the information back to the Call Control block 302.
The Call Control block can also take some further actions in the case that all the advertised codecs are dropped by the Funnel Detection Block. Thus, for example it can order to the endpoints to drop the communication (e.g. by sending a message according to the multimedia protocol used) or leave the communication to proceed, thus leaving the users (or the endpoints) to tear it down if they perceive (or detect) they can not communicate.

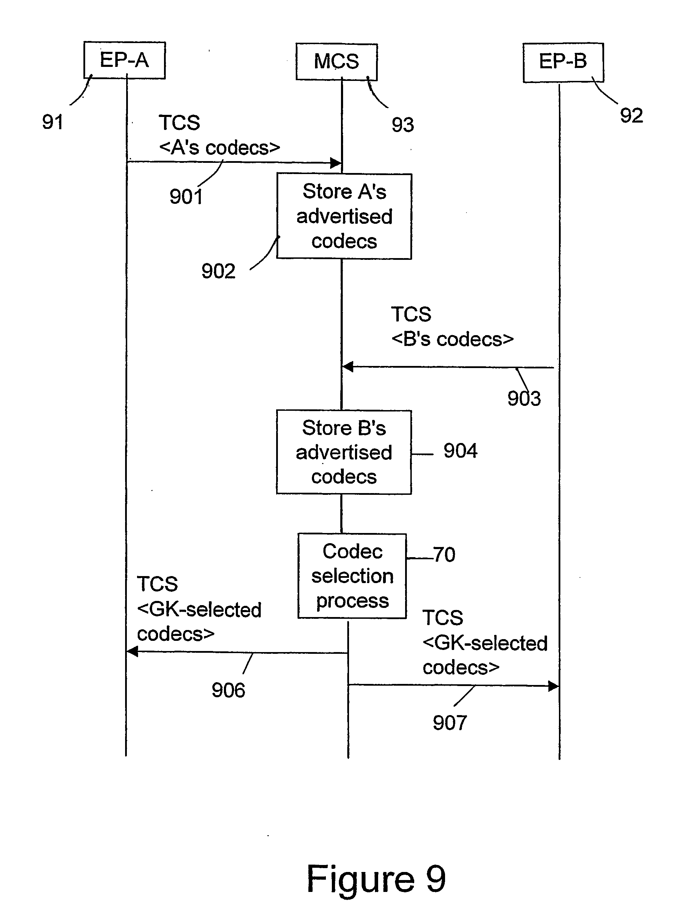

Some examples shall now be given with reference to figures 9, 10 and 11, that show signaling flows according to the recommendations H.323 and SIP, to exemplify codec selection in a communication request. All these figures show a communication requested between two endpoints, EP-A 91, EP-B 92 respective, which communication is controlled by a multimedia controller MCS 93. In the case of the recommendation H.323, the MCS 93 performs among others the functions defined for a "H.323 *Gatekeeper",* as specified by ITU-T Recommendation H.323; while in the case of the recommendation SIP, the MCS performs among others the functions of a *"SIP proxy server"* as specified by IETF-RFC3261.

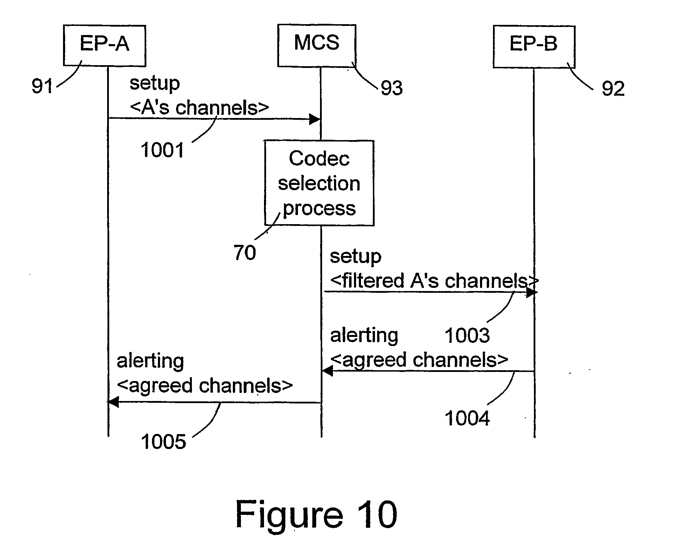

Figures 9 and 10 illustrate two modes of advertising codecs in a communication request between the endpoints 91 and 92 according to the recommendation H.323. In particular Fig.9 shows a first mode in which the codecs are advertised by means of H.245 messages (messages according to ITU-T Recommendation H.245, Jul. '01, which is defined in H.323 Recommendation to be used as a control protocol of multimedia communications). Fig.10 shows a second mode, wherein the codecs are advertised in H.225 call signaling messages (messages according to ITU-T Recommendation H.225, Nov. '00; which is defined in H.323 Recommendation to be used as a call signaling protocol of multimedia communications) that conveys "tunnelled" protocol elements defined in H.245, such as the set of advertised codec identifiers.

In Fig.9, once some H.225 call signaling messages have been exchanged between the endpoints 91 and 92 and the MCS 93, the media capability negotiation related to the communication which is requested takes place by exchanging H.245 messages *TerminalCapabilitySet* 901 respective 903. These messages, which contain the advertised codecs, arrive to the MCS, and are stored, decoded and analysed in blocks 902 and 904 to find out what codecs the endpoints are willing to use for the call.

The codec selection process 70 is then executed as described previously with reference to figures 7 and 8. Among the advertised codecs, as an option, only those which are common to both endpoints can be considered for the process 70, i.e. those indicated in the message 901 which are also indicated in the message 903.

The resulting set of codecs is sent to both endpoints in *TerminalCapabilitySet* messages 906 respective 907. The resulting set of codecs sent in a *TerminalCapabilitySet* message, e.g. the message 906, can be the ones advertised in the corresponding counterpart's message, e.g. the message 903, once filtered by the MCS, or alternatively those which are advertised which are common to both endpoints once filtered.

On reception of these messages, further signaling flows take place which are not shown in Fig.9. At reception of the respective *TerminalCapabilitySet* message 906 and 907, both endpoints answer with *TerminalCapabilitySetAck* messages. The MCS 93, on reception of these messages, just forwards them to the counterpart endpoint. Once an endpoint has received a *TerminalCapabilitySetAck,* a further signaling takes place to establish what is called in H.323 terminology "logical channels" that will convey media packets between the involved endpoints.

It shall be notice that, if after the codec selection process 70 there were no codecs remaining suitable for the call, the endpoints can probably drop the communication, since said endpoints will receive empty TerminalCapabilitySet messages that, according to the H.323 protocol, indicates that the endpoints can neither send nor receive any media. So, in this case, the MCS 93 can drop the communication in advance, e.g. by sending an H.225 message "*release complete".*

The communication request mode shown in Fig.10 is known as *"Fast Connect"* in H.323, and it makes possible to establish data needed for media exchange (including media capability information comprising supported codecs) within the first call signaling message. In this mode, an endpoint advertises the codecs it wish to use for a communication in the first call signalling message it sends. The detailed operation is described next.

The calling endpoint EP-A 91 sends an H.225 *"setup"* message 1001 to the MCS including ("tunnelled") a set of media channel definitions for both outgoing channels, i.e. "logical channels" that will convey media packets from calling to called endpoint, and incoming channels, i.e. "logical channels" from called to calling endpoint. For each media (logical) channel definition, the codec desired for said media channel is included by the endpoint. There may be multiple channel definitions for the same channel, each definition specifying a different codec. These multiple definitions are used by the endpoint sending them to indicate the different codecs that said endpoint can use for a channel.

The MCS 93 receives, decodes and analyses the received *"setup"* message 1001 from the calling endpoint EP-A 91 and obtain the set of codecs that are advertised. These codecs can be used by the codec selection process 70 to filter those not suitable for this communication. A *"setup"* message 1003 is then sent towards the called endpoint EP-B 92, wherein the media channel definitions whose associated codec has been dropped are removed.

The called endpoint EP-B receives the "setup" message and selects from the media channel definitions only those which belong to the channels that it is willing to establish. For example, the calling endpoint may have proposed two video and audio channels e.g. one for each direction. However if the called endpoint wants to establish audio communication only, then it will drop from the setup message received from calling endpoint the media channel definitions corresponding to the video channels. Then it sends a H.225 message *"alerting"* 1004, or other H.225 message such as *"connect",* to the MCS 93 including the remaining media channel definitions. The MCS, in turn, forwards an alerting message 1005 towards the calling endpoint 91.

If after the codec selection process 70 there were no codecs remaining suitable for the communication, the MCS 93 can tear down the communication request, e.g. by sending a H.225 message *"release complete"* towards the calling endpoint EP-A 91, instead of forwarding the "setup" message 1003 towards the called endpoint EP-B 92, since the communication cannot be satisfactorily established.

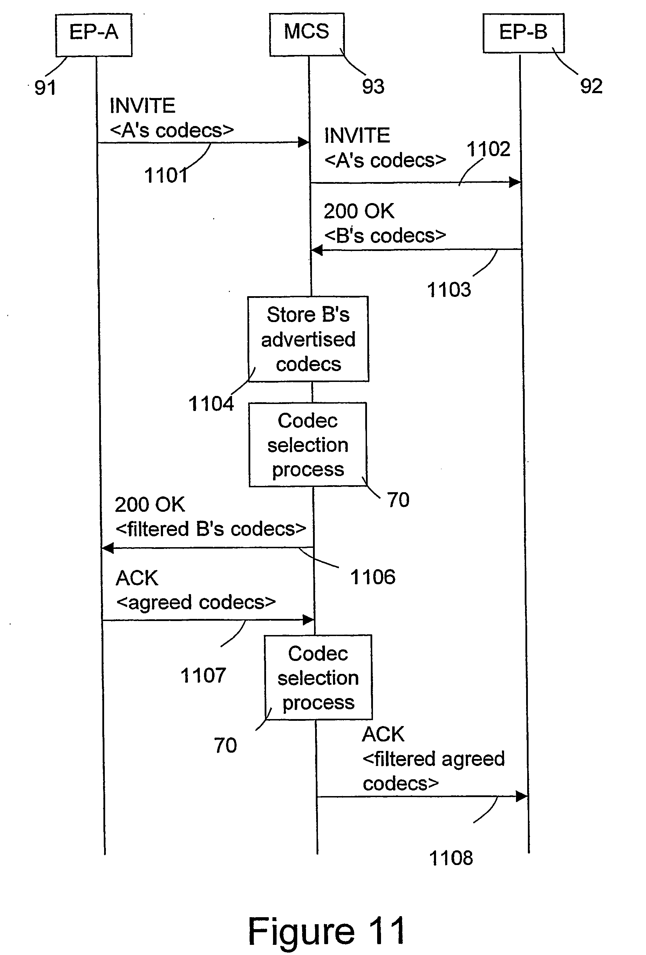

In Fig.11 the endpoint EP-A 91 requests a communication according to the SIP recommendation towards the other endpoint EP-B 92. The signaling is mediated, "proxied", by the MCS 93 having functions of a *SIP proxy* server, although according to the complete functional architecture described previously it can also have co-located or remotely accessed functions of *SIP registrar* server. According to the SIP recommendation, the set of codecs to be used in a multimedia communication are advertised in SDP messages ("Session Description Protocol", IETF-RFC2327) which are embedded within the SIP messages *"INVITE", "200 OK"* responses which are positive response to request messages such as *"INVITE",* and "*ACK*" messages, exchanged during the communication request.

The calling endpoint sends an INVITE message 1101 containing, among other data, the codecs acceptable for the session within an SDP message embedded in the *INVITE* message. The MCS 93 then forwards the received INVITE message 1102 towards the called endpoint EP-B 92 as described in the recommendation SIP RFC3261.
If the called endpoint wishes to accept the call, it responds with an "*200 OK*" response message 1103, that holds an embedded SDP message with its own proposal for codecs to be used during the call. Said proposal has been built by the called endpoint EP-B 92 by dropping from the SDP message received with the INVITE message 1102 those codecs which are unacceptable for it.
According to an alternative implementation, the MCS 93 can then perform the codec selection process 70 on this SDP message and obtain a filtered SDP message, and forward a response *"200 OK*" message 1106 containing the filtered SDP message, wherein some codecs might have been dropped, to the calling endpoint EPA 91. According to a further alternative implementation, the MCS can store the list of codecs proposed by the called endpoint and use it later. In this latest case, the MCS then sends a response "*200 OK*" message 1106 including the embedded SDP message 1103 as received from the called endpoint.

An *ACK* message 1107 is received in the MCS from the calling endpoint EP-A 91. The ACK message 1107 might hold another embedded SDP message that contains the codecs from within those proposed by the called endpoint EP-B 92, that are accepted by the calling endpoint EP-A 91.
If the ACK message 1107 does not hold an embedded SDP message, the MCS 93 can use the previously stored codecs that were extracted from SDP message embedded in the response message 1103 from the called endpoint for running at this step the codec selection process 70. Then, an ACK message 1108 is sent towards the called endpoint EP-B 92, which contains an embedded SDP message comprising the final codec, or set of codecs, to be used in this communication.

Although not depicted in any figure, it is known that, in a given multimedia communication established according to the recommendation H.323 or SIP, any of the endpoints involved in it can either add a new endpoint as a participant, or change the characteristics of a communication already established, e.g. from audio and video to only audio, from audio or video using a given codec, to audio or video using another codec, etc. In these situations, a communication request signalled by using some of the protocol messages depicted in the signaling flows of figures 9 to 11 (or a similar one) can take place, wherein an endpoint sends a message that conveys information related to one or more codecs it desires for the new or modified communication, and wherein the novel codec selection process according to the invention can take place accordingly.

## Claims

1. A method in a telecommunication system for controlling codec selection by a server (48), said telecommunication system including:
- a first physical network (43) and a second physical network (45); and
- endpoint devices (41, 46, 47) connected to said first and second physical networks, which networks offer each a bandwidth capacity,
the method **characterized in that** it includes the steps of:
(a) storing information related to at least one funnel network element (44) that links said first and second physical networks, said information including an address associated with said funnel network element;
(b) receiving a communication request (SETUP, TCS, INVITE, 200 OK) from a first one of the endpoint devices (41,46,47), said request containing a set of advertised codec (308) for said communication;
(c) sending an address detection message (M1) towards said endpoint device (41,46,47); and
(d) selecting at least one of said advertised codecs for being used for said communication, the selection being performed in dependce on if the answer to said address detection message includes an address of said funnel network element (44).

2. The method of claim 1, wherein said stored information related to the funnel network element (44) further includes information about the bandwidth supported for communications through said funnel network element (44), and wherein the selection of step (d) further depends on said bandwidth information.

3. The method of claim 1, wherein the stored information related to the funnel network element (44) further comprises information about the codecs (308) supported for communication through said funnel network element (44), and wherein the selection of step (d) further depends on said codec information.

4. The method of claim 1, wherein said address detection message (M1) is a path-discovery message.

5. The method of claim 4, wherein said path-discovery message is a TRACEROUTE message.

6. The method of claim 1, wherein said address detection message (M1) is an address-resolution message.

7. The method of claim 6, wherein said address-resolution message is an ARP message.

8. An apparatus for controlling the codec selection in a server (48) of a telecommunication system, said telecommunication system including at least a first physical network (43) and a second physical network (45) and a plurality of endpoint devices (41, 46, 47) connected to said first and second physical networks (43,45), each of said physical networks offering each a bandwidth capacity, the apparatus including:
(a) means for receiving a communication request (SETUP, TCS, INVITE, 200 OK) from a first one of the endpoint devices (41,46,47), said request containing a set of advertised codecs (308) for said communication;
the apparatus **characterized in that** it further includes:
(b) means for storing information related to at least one funnel network element (44) that links said first and second physical networks (43,45), said information including at least one address associated with said funnel network element;
(c) means for sending an address detection message (M1) towards said endpoint; and
(d) means for selecting at least one of said - advertised codecs (308) to be used for said communication, the selection being performed in dependence on if the answer to said address detection message includes an address of said funnel network element.

9. The apparatus of claim 8, wherein said stored information related to the funnel network element (44) further includes information about the bandwidth supported for communication through said funnel network element (44), and wherein said means for selecting (d) are further arranged for selecting at least one of the codecs (308) in dependence on said bandwidth information.

10. The apparatus of claim 8, wherein the stored information related to the funnel network element (44) further includes information about the codecs (308) supported for a communication through said funnel network element (44), and wherein said means for selecting (d) are further arranged for selecting at least one of the codecs (308) in dependence on said codec information.

11. The apparatus of claim 8, wherein said address detection message (M1) is a path-discovery message.

12. The apparatus of claim 11, wherein said path-discovery message is a TRACEROUTE message.

13. The apparatus of claim 8, wherein said address detection message (M1) is an address-resolution message.

14. The apparatus of claim 13, wherein said address-resolution message is an ARP message.

## Patentansprüche

1. Verfahren bei einem Telekommunikationssystem zum Steuern einer Codec-Auswahl durch einen Server (48), wobei das Telekommunikationssystem folgende Merkmale umfasst:
ein erstes physisches Netz (43) und ein zweites physisches Netz (45); und
Endpunktvorrichtungen (41, 46, 47), die mit dem ersten und dem zweiten physischen Netz verbunden sind, wobei die Netze jeweils eine Bandbreitenkapazität anbieten,
wobei das Verfahren **dadurch gekennzeichnet ist, dass** dieses folgende Schritte umfasst:
(a) Speichern von Informationen, die auf mindestens ein Trichternetzelement (44), das das erste und das zweite physische Netz verbindet, bezogen sind, wobei die Informationen eine Adresse, die dem Trichternetzelement zugeordnet ist, umfassen;
(b) Empfangen einer Kommunikationsanfrage (SETUP, TCS, INVITE, 200 OK) von einer ersten der Endpunktvorrichtungen (41, 46, 47), wobei die Anfrage einen Satz von bekannt gegebenen Codecs (308) für die Kommunikation enthält;
(c) Senden einer Adressenerfassungsnachricht (M1) zu der Endpunktvorrichtung (41, 46, 47); und
(d) Auswählen von mindestens einem der bekannt gegebenen Codecs, um für die Kommunikation verwendet zu werden, wobei die Auswahl in Abhängigkeit davon durchgeführt wird, ob die Antwort auf die Adressenerfassungsnachricht eine Adresse des Trichternetzelements (44) umfasst.

2. Verfahren nach Anspruch 1, bei dem die gespeicherten Informationen, die auf das Trichternetzelement (44) bezogen sind, ferner Informationen über die Bandbreite, die für Kommunikationen durch das Trichternetzelement (44) unterstützt ist, umfassen, und bei dem die Auswahl von Schritt (d) ferner von den Bandbreiteninformationen abhängt.

3. Verfahren nach Anspruch 1, bei dem die gespeicherten Informationen, die auf das Trichternetzelement (44) bezogen sind, ferner Informationen über die Codecs (308), die für eine Kommunikation durch das Trichternetzelement (44) unterstützt sind, aufweisen, und bei dem die Auswahl von Schritt (d) ferner von den Codec-Informationen abhängt.

4. Verfahren nach Anspruch 1, bei dem die Adressenerfassungsnachricht (M1) eine Wegentdeckungsnachricht ist.

5. Verfahren nach Anspruch 4, bei dem die Wegentdeckungsnachricht eine TRACEROUTE-Nachricht ist.

6. Verfahren nach Anspruch 1, bei dem die Adressenerfassungsnachricht (M1) eine Adressenauflösungsnachricht ist.

7. Verfahren nach Anspurch 6, bei dem die Adressenauflösungsnachricht eine ARP-Nachricht ist.

8. Vorrichtung zum Steuern der Codec-Auswahl in einem Server (48) eines Telekommunikationssystems, wobei das Telekommunikationssystem mindestens ein erstes physisches Netz (43) und ein zweites physisches Netz (45) und eine Mehrzahl von Endpunktvorrichtungen (41, 46, 47), die mit dem ersten und dem zweiten physischen Netz (43, 45) verbunden sind, umfasst, wobei jedes der physischen Netze jeweils eine Bandbreitenkapazität anbietet, wobei die Vorrichtung folgendes Merkmal umfasst:
(a) eine Einrichtung zum Empfangen einer Kommunikationsanfrage (SETUP, TCS, INVITE, 200 OK) von einer ersten der Endpunktvorrichtungen (41, 46, 47), wobei die Anfrage einen Satz von bekannt gegebenen Codecs (308) für die Kommunikation enthält;
wobei die Vorrichtung **dadurch gekennzeichnet ist, dass** diese ferner folgende Merkmale umfasst:
(b) eine Einrichtung zum Speichern von Informationen, die auf mindestens ein Trichternetzelement (44), das das erste und das zweite physische Netz (43, 45) verbindet, bezogen sind, wobei die Informationen mindestens eine Adresse, die dem Trichternetzelement zugeordnet ist, umfassen;
(c) eine Einrichtung zum Senden einer Adressenerfassungsnachricht (M1) hin zu dem Endpunkt; und
(d) eine Einrichtung zum Auswählen von mindestens einem der bekannt gegebenen Codecs (308), um für die Kommunikation verwendet zu werden, wobei die Auswahl in Abhängigkeit davon durchgeführt wird, ob die Antwort auf die Adressenerfassungsnachricht eine Adresse des Trichternetzelements umfasst.

9. Vorrichtung nach Anspruch 8, bei der die gespeicherten Informationen, die auf das Trichternetzelement (44) bezogen sind, ferner Informationen über die Bandbreite, die für eine Kommunikation durch das Trichternetzelement (44) unterstützt ist, umfassen, und bei der die Einrichtung zum Auswählen (d) ferner zum Auswählen von mindestens einem der Codecs (308) in Abhängigkeit von den Bandbreiteninformationen angeordnet ist.

10. Vorrichtung nach Anspruch 8, bei der die gespeicherten Informationen, die auf das Trichternetzelement (44) bezogen sind, ferner Informationen über die Codecs (308), die für eine Kommunikation durch das Trichternetzelement (44) unterstützt sind, umfassen, und bei der die Einrichtung zum Auswählen (d) ferner zum Auswählen von mindestens einem der Codecs (308) in Abhängigkeit von den Codec-Informationen angeordnet ist.

11. Vorrichtung nach Anspruch 8, bei der die Adressenerfassungsnachricht (M1) eine Wegentdeckungsnachricht ist.

12. Vorrichtung nach Anspruch 11, bei der die Wegentdeckungsnachricht eine TRACEROUTE-Nachricht ist.

13. Vorrichtung nach Anspruch 8, bei der die Adressenerfassungsnachricht (M1) eine Adressenauflösungsnachricht ist.

14. Vorrichtung nach Anspruch 13, bei der die Adressenauflösungsnachricht eine ARP-Nachricht ist.

## Revendications

1. Procédé, dans un système de télécommunications, de commande de choix de codeurs-décodeurs par un serveur (48), ledit système de télécommunications comprenant :
- un premier réseau physique (43) et un second réseau physique (45) ; et
- des dispositifs (41, 46, 47) d'extrémité connectés auxdits premier et second réseaux physiques, lesquels réseau offrent chacun une certaine capacité en largeur de bande ;
le procédé étant **caractérisé en ce qu'**il comprend les étapes :
(a) de mémorisation d'information se rapportant à au moins un élément (44) de réseau formant entonnoir qui relie lesdits premier et second réseaux physiques, ladite information incluant une adresse associée audit élément de réseau formant entonnoir ;
(b) de réception d'une demande de communication (SETUP, TCS, INVITE, 200 OK) provenant d'un premier des dispositifs (41, 46, 47) d'extrémité, ladite demande contenant un ensemble de codeurs-décodeurs (308) ayant fait l'objet de publicité pour ladite communication ;
(c) d'envoi d'un message (M1) de détection d'adresse en direction dudit dispositif (41, 46, 47) d'extrémité ; et
(d) de choix d'au moins un desdits codeurs-décodeurs ayant fait l'objet de publicité pour être utilisé pour ladite communication, le choix étant fait en fonction de ce que la réponse audit message de détection d'adresse contient, ou non, une adresse dudit élément (44) de réseau formant entonnoir.

2. Procédé selon la revendication 1, dans lequel ladite information mémorisée se rapportant à l'élément (44) de réseau formant entonnoir comprend en outre de l'information au sujet de la largeur de bande supportée pour des communications à travers ledit élément (44) de réseau formant entonnoir, et dans lequel le choix de l'étape (d) dépend en outre de ladite information de largeur de bande.

3. Procédé selon la revendication 1, dans lequel ladite information mémorisée se rapportant à l'élément (44) de réseau formant entonnoir comprend en outre de l'information au sujet des codeurs-décodeurs (308) supportés pour communication à travers ledit élément (44) de réseau formant entonnoir, et dans lequel le choix de l'étape (d) dépend en outre de ladite information de codeurs-décodeurs.

4. Procédé selon la revendication 1, dans lequel ledit message (M1) de détection d'adresse est un message de découverte de chemin.

5. Procédé selon la revendication 4, dans lequel ledit message de découverte de chemin est un message TRACEROUTE.

6. Procédé selon la revendication 1, dans lequel ledit message (M1) de détection d'adresse est un message de résolution d'adresse.

7. Procédé selon la revendication 6, dans lequel ledit message de résolution d'adresse est un message ARP.

8. Équipement destiné à commander le choix de codeurs-décodeurs dans un serveur (48) d'un système de télécommunications, ledit système de télécommunications comprenant au moins un premier réseau physique (43) et un second réseau physique (45) et une pluralité de dispositifs (41, 46, 47) d'extrémité connectés auxdits premier et second réseaux physiques (43, 45), chacun desdits réseaux physiques offrant chacun une certaine capacité en largeur de bande, l'équipement comprenant :
(a) des moyens destinés à recevoir une demande de communication (SETUP, TCS, INVITE, 200 OK) provenant d'un premier des dispositifs (41, 46, 47) d'extrémité, ladite demande contenant un ensemble de codeurs-décodeurs (308) ayant fait l'objet de publicité pour ladite communication ;
l'équipement étant **caractérisé en ce qu'**il comprend en outre :
(b) des moyens destinés à mémoriser de l'information se rapportant à au moins un élément (44) de réseau formant entonnoir qui relie lesdits premier et second réseaux physiques (43, 45), ladite information incluant au moins une adresse associée audit élément de réseau formant entonnoir ;
(c) des moyens destinés à envoyer un message (M1) de détection d'adresse en direction de ladite extrémité ; et
(d) des moyens destinés à choisir au moins un desdits codeurs-décodeurs (308) ayant fait l'objet de publicité pour être utilisé pour ladite communication, le choix étant fait en fonction de ce que la réponse audit message de détection d'adresse contient, ou non, une adresse dudit élément de réseau formant entonnoir.

9. Équipement selon la revendication 8, dans lequel ladite information mémorisée se rapportant à l'élément (44) de réseau formant entonnoir comprend en outre de l'information au sujet de la largeur de bande supportée pour communication à travers ledit élément (44) de réseau formant entonnoir, et dans lequel lesdits moyens destinés à choisir (d) sont en outre agencés pour choisir au moins un des codeurs-décodeurs (308) en fonction de ladite information de largeur de bande.

10. Équipement selon la revendication 8, dans lequel l'information mémorisée se rapportant à l'élément (44) de réseau formant entonnoir comprend en outre de l'information au sujet des codeurs-décodeurs (308) supportés pour communication à travers ledit élément (44) de réseau formant entonnoir, et dans lequel lesdits moyens destinés à choisir (d) sont en outre agencés pour choisir au moins un des codeurs-décodeurs (308) en fonction de ladite information de codeurs-décodeurs.

11. Équipement selon la revendication 8, dans lequel ledit message (M1) de détection d'adresse est un message de découverte de chemin.

12. Équipement selon la revendication 11, dans lequel ledit message de découverte de chemin est un message TRACEROUTE.

13. Équipement selon la revendication 8, dans lequel ledit message (M1) de détection d'adresse est un message de résolution d'adresse.

14. Équipement selon la revendication 13, dans lequel ledit message de résolution d'adresse est un message ARP.
